# EUROPÄISCHE PATENTANMELDUNG

(11) **EP 3 972 139 A1**
(43) Veröffentlichungstag der Anmeldung: **23.03.2022**
(21) Anmeldenummer: 21197925.7
(22) Anmeldetag: 21.09.2021
(51) Int. Cl.: H04B 1/38, H04W 84/00, H04W 88/08, F21S 8/08

(54) **STRASSENLEUCHTE MIT MOBILFUNKBASISSTATION**

(30) Priorität: 21.09.2020 DE 102020124560
(71) Anmelder: Siteco GmbH, 83301 Traunreut (DE)
(72) Erfinder: Cantignon, Jörg, 97440 Schleerieth (DE); Weber, Matthias, 83413 Fridolfing (DE)
(74) Vertreter: Schmidt, Steffen

(57) **Zusammenfassung**

Die Erfindung betrifft eine Straßenleuchte, die Folgendes aufweist: einen Leuchtenmast, einen Leuchtenkopf, der ein Leuchtmittel der Straßenleuchte aufweist, eine Basisstation eines Mobilfunknetzes, und ein Ausrüstungsset, welches an dem Leuchtenmast und/oder an dem Leuchtenkopf installiert ist, wobei das Ausrüstungsset einen Geräteraum aufweist, in welchem wenigstens eine Antenne der Basisstation angeordnet ist.

## Beschreibung

Die vorliegende Erfindung betrifft eine Straßenleuchte mit einer integrierten Basisstation für Mobilfunknetze und insbesondere eine Straßenleuchte mit einem Ausrüstungsset, in welchem die Antennen sowie ggf. Verstärker und/oder Teile der Vermittlungstechnik der Basisstation angeordnet sind.

Fortschreitende Mobilfunkstandards wie insbesondere 5G und mögliche Nachfolgestandards, bieten höhere Datenübertragungsraten und ermöglichen dadurch schnellere und zuverlässigere Verbindungen zu Endgeräten, insbesondere mobilen Smartphones oder z.B. Einrichtungen für autonomes Fahren. Allerdings erfordern höhere Datenübertragungsraten, z.B. in höheren Mobilfunkstandards, kleinere Mobilfunkzellen, was das Aufstellen von wesentlich mehr Basisstationen im Vergleich zu den vorhergehenden Standards erfordert. Dafür sind die Basisstationen für kleinere Zellen im Vergleich zu älteren Standards in den räumlichen Abmessungen auch kleiner.

Das Einrichten von Basisstationen der neuesten Mobilfunknetzgenerationen in der gleichen Art und Weise wie es für die älteren Mobilfunknetze erfolgt ist, genügt daher nicht, um ausreichende Datenübertragungsraten zu erzielen. Ferner wäre die Installation der Basisstationen für neure Mobilfunknetze in der gleichen Art und Weise, wie die Basisstationen aus dem Stand der Technik, auch sehr kostenintensiv, weil die Basisstation in der Regel an ein eigenes aufwändiges Trägersystemen montiert werden. Ferner gibt es für die Vielzahl der Basisstationen für kleinere Zellen Probleme mit der Erschließung geeigneter Standorte.

Es ist daher die Aufgabe der vorliegenden Erfindung eine alternative kostengünstige Variante zum Installieren von Basisstationen der neuesten Generation von Mobilfunknetzen zu finden.

Gelöst wird die Aufgabe durch eine Straßenleuchte nach Anspruch 1 und durch ein Ausrüstungsset nach Anspruch 14.

Erfindungsgemäß ist vorgesehen, die Basisstation eines Mobilfunknetzes, insbesondere eines Mobilfunknetzes nach dem 5G-Standard oder höher, in einer Straßenleuchte zu integrieren. Dies bietet mehrere Vorteile. Straßenleuchten sind im öffentlichen Verkehrsraum ohnehin vorhanden und weisen eine Höhe auf, die für den Installationsort der Antennen von Basisstationen für kleinere Zellen ausreichend sind. Basisstationen für größere Zellen, z.B. älterer Mobilfunknetze, müssen in größeren Höhen installiert werden, jedoch reicht eine Installationshöhe von drei bis zehn Metern für Basisstationen nach dem 5G-Standard durchaus aus. Dazu ist erfindungsgemäß ein Ausrüstungsset vorgesehen, welches am Leuchtenmast und/oder am Leuchtenkopf der Straßenleuchte angebracht ist, um darin in einem Geräteraum wenigstens eine oder mehrere Antennen der Basisstation und ggf. Verstärker und/oder Teile der Vermittlungstechnik anzuordnen. Ferner weisen Straßenleuchten den Vorteil auf, dass bereits eine Installation zur elektrischen Versorgung vorhanden ist. Von dieser bereits vorhandenen elektrischen Versorgung kann auch die Spannungsversorgung für die Basisstation bereit gestellt werden, ohne dass größere Umbaumaßnahmen notwendig sind. Ferner weisen Straßenleuchten den Vorteil auf, dass sie, im Unterschied zu gebäudeseitig installierten Einrichtungen, in der Regel eine Rundumsicht in alle Richtungen ermöglichen. Dies ist nahezu ideal für die Anordnung der Antennen von Basisstationen. Schließlich ist es bei der Einrichtung neuer Mobilfunknetze bevorzugt, zunächst Straßen räumlich abzudecken, weil auf diesen Verkehrswegen der höchste Bedarf an einer flächendeckenden Mobilfunkversorgung besteht. Daher sind die entlang der Straßen angeordneten Straßenleuchten als Träger für Basisstationen durch ihre räumliche Lage ebenfalls besonders gut geeignet.

Gemäß einer bevorzugten Ausführungsform weist der Geräteraum eine Außenwand auf, die sich über 360° um den Leuchtenmast und/oder den Leuchtenkopf erstreckt, und die Außenwand ist für elektromagnetische Strahlung transparent. Dadurch kann die Basisstation alle Raumwinkel um die Straßenleuchte abdecken.

Gemäß einer bevorzugten Ausführungsform ist das Ausrüstungsset an die Geometrie einer Außenkontur des Leuchtenmasts und/oder des Leuchtenkopfs angepasst. Beispielsweise kann das Ausrüstungsset den gleichen Umfang wie der Leuchtmast oder der Leuchtenkopf aufweisen. Vorzugsweise schließt die gleiche Geometrie das Ausrüstungsset ohne Stufe an dem entsprechenden Bauteil des Leuchtenmasts oder des Leuchtenkopfs an, so dass sich in diesem Bereich kein Schmutz oder Schnee ansammeln kann, welcher nicht nur das Aussehen der Leuchte negativ beeinflussen würde sondern, insbesondere bei Schnee, auch eine Abschirmung der Antennen zur Folge hätte.

Gemäß einer bevorzugten Ausführungsform ist das Ausrüstungsset als Mastmanschette um den Leuchtenmast ausgebildet. Eine Mastmanschette lässt sich besonders einfach an einer bereits vorhandenen Straßenleuchte nachrüsten und weist den Vorteil auf, dass sie um den gesamten Umfang des Leuchtenmasts Außenwände aufweist, durch welche die Antennen im Inneren des Geräteraums in alle Raumwinkel senden und empfangen können.

Gemäß einer bevorzugten Ausführungsform ist das Ausrüstungsset als Zwischenstück des Leuchtenmasts ausgebildet und insbesondere zwischen einem Ende des Leuchtenmasts und einem Ende des Leuchtenkopfs angeordnet. Beispielsweise kann das Mastzwischenstück die gleiche Umfangsform aufweisen wie der Leuchtenmast. Das Mastzwischenstück kann auch als kontinuierliches Verbindungselement zwischen dem Leuchtenmast und dem Leuchtenkopf mit unterschiedlichen Durchmessern ausgebildet sein. Auch das Mastzwischenstück kann nachträglich an einer Straßenleuchte montiert werden. Dazu ist insbesondere vorgesehen, dass das Mastzwischenstück auf der zum Leuchtenmast weisenden Seite eine Aufnahme für den Leuchtenmast und auf der zum Leuchtenkopf weisenden Seiten eine entsprechende Aufnahme aufweist, auf die eine Mastaufnahme des Leuchtenkopfs montiert werden kann. Dadurch kann das Mastzwischenstück einfach zwischen einen Leuchtenmast und einen Leuchtenkopf, fachsprachlich auch als "Leuchte" bezeichnet, nachträglich montiert werden, indem der Leuchtenkopf von dem Leuchtenmast abgenommen wird und auf das Zwischenstück wieder aufgesetzt wird.

Gemäß einer bevorzugten Ausführungsform ist das Ausrüstungsset als Aufsatz auf den Leuchtenkopf ausgebildet. Der Aufsatz kann beispielsweise auf dem Leuchtenkopf an der dem Leuchtenmast gegenüberliegenden Seite montiert werden. Dies ist baulich sehr einfach, weil dazu der Leuchtenkopf von dem Leuchtenmast nicht getrennt werden muss und die Höhe des Leuchtenkopfs erhalten bleibt. Ferner bietet auch diese Position die Möglichkeit, dass alle Raumwinkel um die Leuchte von den Antennen im Geräteraum des Ausrüstungssets abgedeckt werden können.

Gemäß einer bevorzugten Ausführungsform ist das Ausrüstungsset als Einschub in den Leuchtenmast oder den Leuchtenkopf ausgebildet. In dieser Ausführungsform ist das Ausrüstungsset in dem Leuchtenkopf bzw. in dem Leuchtenmast vollständig integriert. Diese Ausführungsform ist bevorzugt, wenn das Material des Leuchtenmasts bzw. das Material des Leuchtenkopfs für elektromagnetische Strahlung durchlässig ist. Beim Leuchtenkopf aus Metall kann auch vorgesehen sein, dass die Antenne in einer separaten strahlungsdurchlässigen Manschette vorgesehen ist, die vorzugsweise den gleichen Umfang wie der Leuchtenmast hat.

Gemäß einer bevorzugten Ausführungsform umfasst die wenigstens eine Antenne mehrere Flächen- und/oder Folienantennen, die innen liegend an einer Außenwanne des Geräteraums entlang des Umfangs des Leuchtenmasts und/oder des Leuchtenkopfs angeordnet sind. Die mehreren Antennen können insbesondere den gesamten Raumwinkelbereich von 360° um die Leuchte abdecken.

Gemäß einer bevorzugten Ausführungsform ist das Ausrüstungsset in einer Höhe zwischen drei und zwölf Meter, insbesondere zwischen drei und fünf Meter, über dem Boden an dem Leuchtenmast und/oder dem Leuchtenkopf angebracht. Diese Höhe, die der üblichen Höhe einer Straßenleuchte entspricht, ist für die Anordnung der Antennen einer Basisstation für kleinere Zellen, z.B. nach dem 5G-Standard, besonders geeignet.

Gemäß einer bevorzugten Ausführungsform weist die Straßenleuchte ferner einen Bodentank oder einen bodennahen Schaltschrank auf, in welchem Komponenten der Basisstation angeordnet sind. In dem Bodentank bzw. den Schaltschrank kann Vermittlungs- und Servicetechnologie, d.h. weitere Komponenten der Basisstation, außer den Antennen, untergebracht werden, welche mit den Antennen in dem Geräteraum zusammenwirken. Dadurch lässt sich platzsparend die Installation der Basisstation an der Leuchte unterbringen. In anderen Ausführungsformen kann der Schaltschrank auch separat von der Straßenleuchte angeordnet sein. Das Ausrüstungsset im oberen Bereich der Leuchte kann baulich klein ausgeführt werden, wenn lediglich die Antennen darin unterzubringen sind.

Gemäß einer bevorzugten Ausführungsform sind in dem Ausrüstungsset Komponenten für eine optische Kommunikation, Virtual Light Communication, VLC, angeordnet. Dazu kann ein optisches Fenster, z.B. in Form einer Linse, in dem Ausrüstungsset vorgesehen sein, so dass die optische Kommunikation durch dieses Fenster erfolgt.

Gemäß einer bevorzugten Ausführungsform weist das Ausrüstungsset Außenwände auf, die den Geräteraum gegen Staub, Stöße, Feuchtigkeit, Wind und/oder UV-Strahlung schützen, insbesondere einen Schutz nach IP44 oder höher gewährleisten. Eine Außenwand, welche der Schutzklasse genügt, lässt sich kostengünstig aus Kunststoff fertigen, so dass die Außenwand auch für elektromagnetische Strahlung durchlässig ist.

Gemäß einer bevorzugten Ausführungsform weist das Ausrüstungsset eine Außenwand auf, die aus mehreren, vorzugsweise gleich geformten, Schalenelementen besteht, welche den Geräteraum nach außen umschließen. Die immer gleich geformten Schalenelemente lassen sich besonders einfach herstellen und sind auch bei der Montage besonders einfach zu handhaben.

Weiter Vorteile und Merkmale der vorliegenden Erfindung werden aus der nachfolgenden Beschreibung deutlich, die in Verbindung mit den Figuren gegeben wird. In den Figuren ist Folgendes dargestellt:
- Figur 1: zeigt ein manschettenförmiges Ausrüstungsset für Straßenleuchten.
- Figur 2: zeigt eine Aufsicht auf das Ausführungsset nach Anspruch 1 von oben.
- Figur 3: zeigt eine Aufsicht auf das Ausführungsset nach Figur 1 von unten.
- Figur 4: zeigt eine Straßenleuchte mit einem manschettenförmigen Ausrüstungsset nach Figur 1.
- Figur 5: zeigt ein Ausrüstungsset für eine Straßenleuchte in Form eines Leuchtenaufsatzes.
- Figur 6: zeigt das Ausrüstungsset nach Figur 5 in einer Aufsicht von oben und von unten.
- Figur 7: zeigt einen Leuchtenkopf einer Straßenleuchte mit dem Ausrüstungsset nach Figur 5.
- Figur 8: zeigt zwei Leuchtenköpfe mit einem darin integrierten Ausrüstungsset.
- Figur 9: zeigt eine Straßenleuchte mit einem im Leuchtenmast integrierten Ausrüstungsset.
- Figur 10: zeigt eine Straßenleuchte mit einem Ausrüstungsset, welches als Mastzwischenstück integriert ist.

Die Ausführungsformen der vorliegenden Erfindung sehen eine Straßenleuchte vor, in der eine Basisstation eines Mobilfunknetzes, insbesondere 5G, integriert ist. Hierfür ist eine Mobilfunksende- und Empfangstechnologie mit ihren Antennen und ggf. Vermittlungstechnik und Peripheriegeräte in Ausrüstungssets integriert.

Bei den Ausrüstungssets handelt sich um für Masten und Leuchten passgenau entwickelte Gehäuse aus verstärktem Kunststoff mit Geräteträgern, die eine schnelle, verdeckte und einfache Anbringung der Mobilfunktechnologie an/um den herkömmlichen Masten oder Leuchten ermöglicht: Mastmanschetten-Sets, Leuchtenaufsatz-Sets, Leuchtenintegrations-Sets, Masteinschub- und Maststück-Sets.

Die Ausrüstungssets mit ihren Geräteträgern bieten beispielsweise Montageplätze für die Antennen und optional auch der Vermittlungstechnik (Radios/Serversysteme), den Elektro-/ Datenleitungsanschlüssen, dem Überspannungsschutz und den Sicherungen.

Auch Stromzähler finden Platz, die eine separate Abrechnung der durch die Mobilfunkanlagen verbrauchten Energie ermöglichen. Bei der Mobilfunktechnologie handelt es sich um sogenannte Small Cell Technologie, also miniaturisierte Mobilfunksende- und Empfangsanlagen, deren Feldstärke kleine Mobilfunkzeilen mit 15 bis 500 Metern Mobilfunkradius ermöglichen. Die integrierte Mobilfunksende- und Empfangstechnik wirkt mit ihrem Funk horizontal 360° durch das Gehäuse hindurch.

Für die Rundstrahlung werden Rundstrahlantennen oder Sektorantennen eingesetzt, dort wo möglich platzsparende Folienantennen. Mit der Erfindung werden Antennen entweder innerhalb der Kunststoffgehäuse der Ausrüstungssets an den Geräteträger montiert, so dass sie geschützt und unsichtbar sind, aber nah an die Kunststoff-Außenwand gerückt sind, um eine weite und breite Funkwellenausbreitung innerhalb des zu versorgenden Mobilfunksektors zu ermöglichen. Flächen - bzw. Folienantennen können innenliegend im Ausrüstungsset angebracht, horizontal an die Außenwand der Ausrüstungssets oder innen auf ein Glas der Leuchte. Sie sind platzsparend und ermöglichen ein schlankes Ausrüstungsset, das den Durchmesser des Masts nicht verdoppelt. Im Stand der Technik entstehende Funkschatten durch Mast, Befestigungswand oder anderes Befestigungsmaterial werden vermieden. Die Anbringung der Ausrüstungssets selbst erfolgt am Mast unterhalb des Leuchtenkopfs oder an/in dem Leuchtenkopf, der in europäischen Siedlungsgebieten auf 4 bis 12 Meter über dem Boden sitzt. Diese Anbringungshöhe in Kombination mit einer überwiegenden 360° Ausstrahlungsmöglichkeit ist für die neuen Mobilfunkstandards optimal, da die Wege zu den Mobilfunkteilnehmern, z.B. autonome Fahrzeuge, Teilnehmer im Internet der Dinge oder Smartphones kurz gehalten werden und dennoch ein ausreichender Sicherheitsabstand der Sendeanlagen zu den Passanten gegeben ist, wodurch die Erfindung Mobilfunk-Sicherheitsabstände einhält und restriktive Feldstärkebeschränkungen umgeht.

Die im Ausrüstungsset liegenden Mobilfunksende- und Empfangseinrichtungen können direkt per Leitung an das Stromnetz und das zentrale Mobilfunknetz der Mobilfunkanbieter angebunden werden. Alternativ wird die Vermittlungs- und Servertechnologie in Bodentanks oder bodenstehende Schaltschränke ausgelagert, so dass die zentral wirkende Vermittlungs- und Servertechnologie die Antennen mehrerer Masten/Leuchten versorgt. Dadurch kann weiterer Platz im Mast der Leuchte eingespart werden.

Zusätzlich sehen Ausführungsformen der Erfindung eine Integration von Anlagen zur optischen Kommunikation (Visual Light Communication - VLC) in den Ausrüstungssets vor, die eine kostengünstige breitbandige Datenanbindung ohne Leitung ermöglichen. Diese optischen Kommunikationsanlagen wirken durch einen optischen Durchlass durch das Gehäuse nach außen und erlauben dadurch den Datenaustausch mit benachbarten Ausrüstungssets.

Das Gehäuse bietet dem Inhalt Schlag- und IP-Schutz (Ingress-Protection) vor z.B. Staub, Stößen, Feuchtigkeit, Wind und UV-Strahlung. Dadurch ist insbesondere ein Schutz vor Wind- und Wettereinflüssen, vor Vandalen, Tieren und auch ein Sichtschutz gegeben. Anders als andere Lösungen, den Austausch des Masts oder der Leuchte vorsehen, nutzt die Erfindung herkömmliche Masten und Leuchten und ermöglicht dadurch einen minimalinvasiven Eingriff in die bestehende Beleuchtungsinfrastruktur und des Straßenbild. Abrundungen der Gehäuseform, die zum Mast und zur Leuchte hin verlaufend führen, ermöglichen, dass Mast/Leuchtenkopf und Ausrüstungsset der Basisstation als optische Gesamteinheit wahrgenommen werden. Im Gegensatz zur Anbringung herkömmlicher Geräte mit Mastschellen, passt sich das Ausrüstungsset der Erfindung der bestehenden Leuchte stärker an und vermeidet Vogelnistplätze, grobe optische Störungen des Straßenbildes und Funkschatten durch den Mast. Das Gerätegehäuse mit der integrierten Mobilfunktechnologie, den Peripheriegeräten und den Gehäusearretierschrauben dient aber auch der einfachen und schnellen Montage und Wartung der Mobilfunktechnologie an den Beleuchtungsanlagen.

Die Ausrüstungssets können unterschiedliche Formen annehmen.

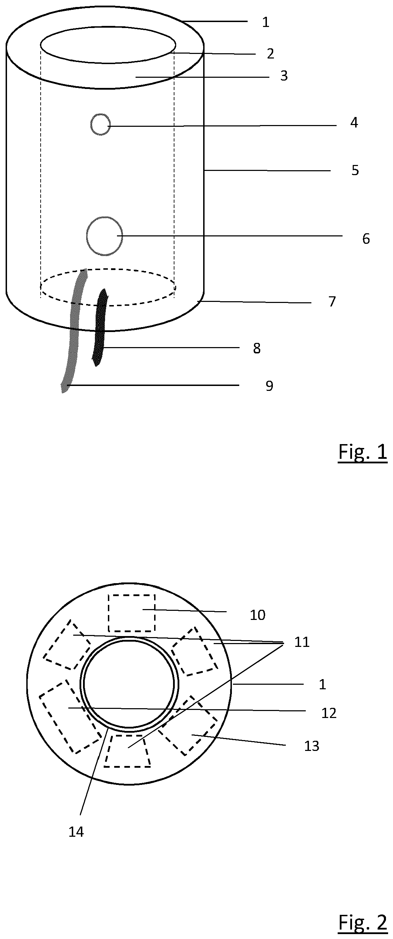

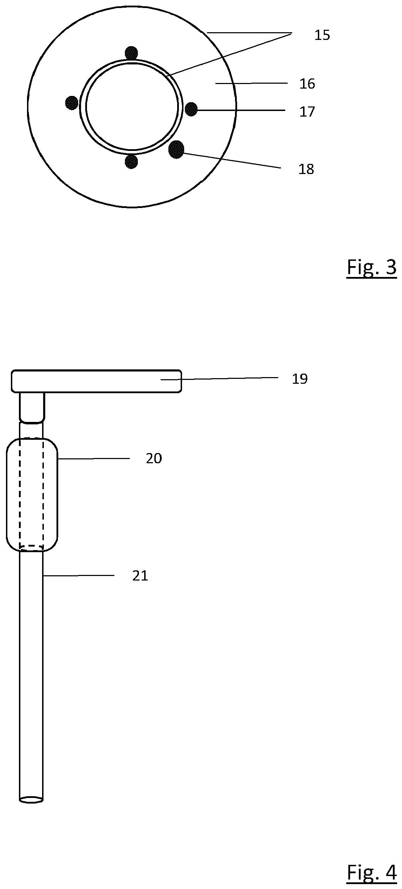

In der Ausführungsform nach Figuren 1 bis 4 ist ein manschettenförmiges Ausrüstungsset dargestellt, das außen über bestehende Maste gestülpt und dort z.B. mit einer Befestigungsschraube am Mast arretiert wird. Zuleitungen für die Elektro- und Datenanbindung lassen sich am Mast außen oder durch eine Bohrung innen im Mast führen. Für dünnere oder für konische Masten kann der vorgesehene Innendurchmesser der Manschette durch Reduzierstücke verringert werden.

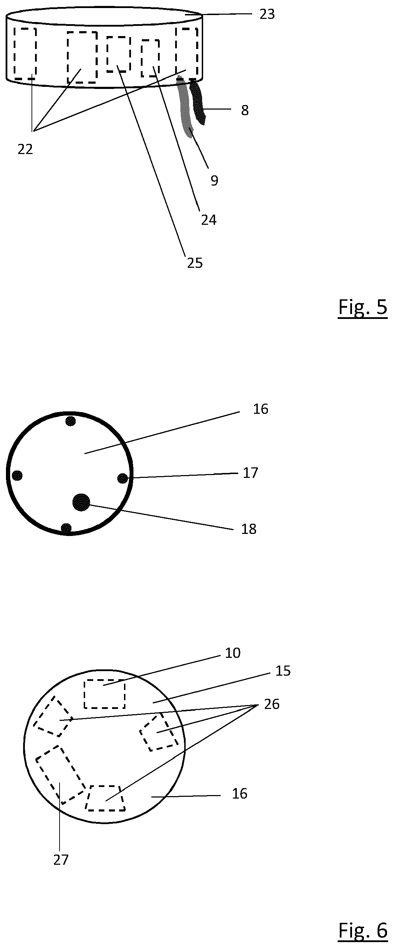

In den Figuren 5 bis 7 ist ein Ausführungsset dargestellt, welches als Aufsatz zum Aufsetzen auf eine Vielzahl verschiedener Leuchtenköpfe bestimmt ist. Das Ausrüstungsset wird auf die Oberseite der Leuchte aufgesetzt, so dass optisch eine Einheit mit dem Leuchtenkopf entsteht. Zuleitungen für die Elektro- und Datenanbindung werden außen an der Leuchte oder durch eine Bohrung innerhalb der Leuchte und/oder des Masts geführt.

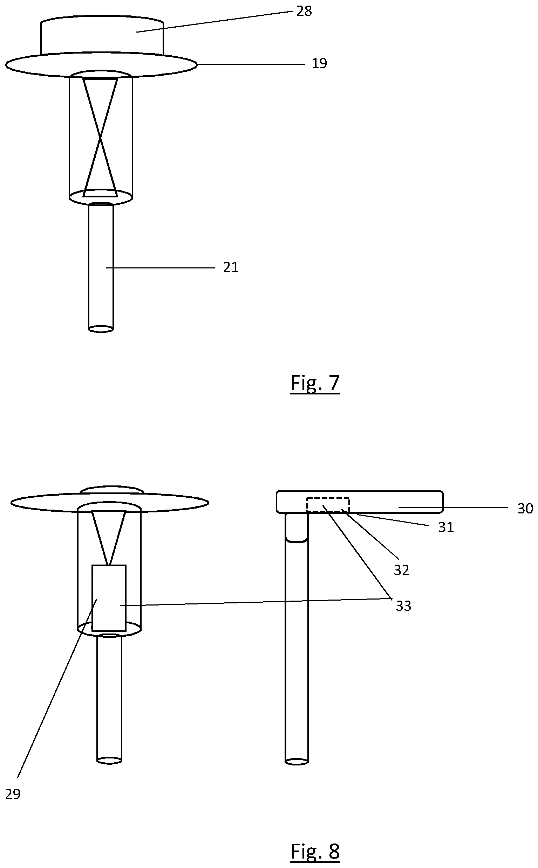

Gemäß anderen Ausführungsformen von integrierten Ausrüstungssets, welche in Figur 8 dargestellt sind, kann das Ausführungsset auch in den Leuchtenkopf integriert sein. Die Art der Anbringung ermöglicht eine Ausstrahlung und -empfang der Funkwellen durch das Glaselement des Leuchtenkopfs. Hierfür werden Flächen- bzw. Folienantennen hinter bzw. auf das Glas aufgebracht. Die Ausrüstungssets werden dabei neben dem Leuchtmittel angeordnet, so dass es den Lichtaustritt der Lichtquelle nicht behindert.

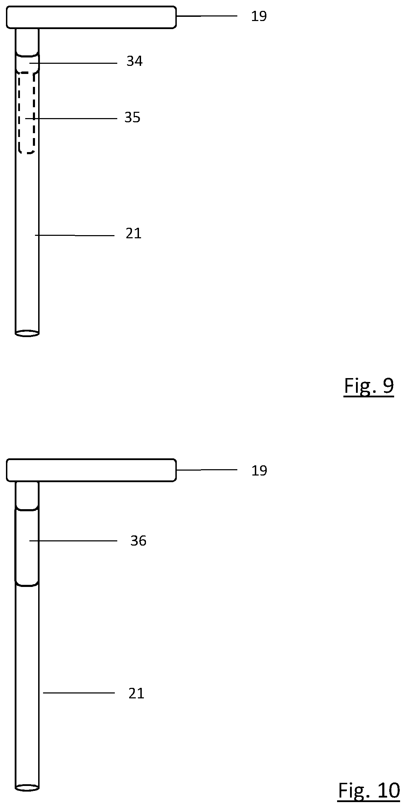

Eine weitere Ausführungsform des Ausrüstungssets umfasst einen Masteinschub, wie in Figur 9 dargestellt. Der Masteinschub ermöglicht das Versenken eines großen Teils der Technik in einem Behälter im hohlen Mast, wobei nur die Antennentechnik in einem Kunststoffgehäuse aus dem Mast manschettenförmig herausschaut. Die Antennen-manschette sitzt am oberen Ende des Ausrüstungssets und verfügt über einen ca. drei bis 50 mm größeren Außendurchmesser als der versenkbare untere Behälter. Der untere Behälter kann zylindrisch oder eckig sein und er erlaubt, dass Daten- und Stromleitungen vom Kabelübergangskasten zur Leuchte durch das Ausrüstungsset geführt werden. Er ist zur Steigerung der Mast-Statik aus Metall gefertigt. Die Antennen-Manschette mit Kunststoffgehäuse bietet Platz für Rundstrahl-, Sektor oder Folienantennen. Beim Einsatz von Folienantennen kann der Außendurchmesser des dünneren unteren metallenen Gerätebehälters bis zur Oberkante der Antennenmanschette nach oben fortgeführt werden, so dass sich zwischen der metallenen Innenwand und der Kunststoffaußenwand der Antennenmanschette ein kreisförmiger Spalt ergibt, in dem die Folienantenne sitzt. Zuleitungen für die Elektro- und Datenanbindung der Antenne oder des Gerätebehälters erfolgen innerhalb des Masts nach unten.

Schließlich ist in einer Ausführungsform auch ein Ausführungsset in Form eines Mastzwischenstückes vorgesehen, wie in Figur 10 dargestellt. Das Maststück integriert die Mobilfunk-Basisstation in ein Rohrstück aus verstärktem Kunststoff. Es weist am unteren Ende eine Muffe auf, mit dem das Ausrüstungsset auf den bestehenden Mast aufsetzen lässt. Am oberen Ende des Maststücks wird der Leuchtenkopf aufgesetzt. Für dünnere Masten kann der vorgesehene Innendurchmesser des Mastzwischenstücks durch Reduzierstücke verringert werden. Zuleitungen für die Elektro- und Datenanbindung erfolgen innerhalb des Maststücks und weiter im Mast in den Boden.

### Bezugszeichenliste

- 1: Kunststoff-Gehäuse, oben und unten gewölbt
- 2: Innendurchmesser
- 3: Für die Technologie zur Verfügung stehender Innenraum
- 4: Arretierschraube für Befestigung an Mast
- 5: Kunststoff-Gehäuse
- 6: Linse für optische Kommunikation mit benachbarten Geräten (Visual Light Communication)
- 7: Abtropflippe, Wartungs-Öffnung am Boden mit Schraubverschluss. Boden aus Metall zur Befestigung der Geräteträger
- 8: Elektro-Leitungen (L, N, PE)
- 9: Daten-/Glasfaseranschluss
- 10: Server/Vermittlungstechnik (optional)
- 11: Wahlweise Sektor-Antennen oder Folienantenne an Wand
- 12: Überspannungsschutz, Sicherungen (optional)
- 13: Stromzähler (optional)
- 14: Geräteträger
- 15: Kunststoff-Gehäuse mit Abtropflippe und Dichtungen
- 16: Stabiler Boden für die Anbringung der Geräte
- 17: Verschraubungen für die Befestigung der Bodenplatte an der Manschette und die Anbringung des Reduzierstücks
- 18: Leitungsdurchführung
- 19: Leuchte
- 20: Sende-/Empfangseinheit in Manschettenform
- 21: Leuchtenmast
- 22: Antenne(n)
- 23: Kunststoffgehäuse, oben gewölbt
- 24: Server/Radio-Technologie
- 25: Überspannungsschutz, Sicherungen, Stromzähler
- 26: Wahlweise Sektor-Antennen oder Folienantenne an innen an der Außenwand
- 27: Überspannungsschutz, Stromzähler, Sicherungen (optional)
- 28: Sende-/Empfangseinheit in Form eines Aufsatzes für Leuchten
- 29: Antenne innen an der Außenwand des Ausrüstungssets
- 30: Lampe/LED-Modul
- 31: Glasabdeckung
- 32: Antenne innen hinter dem Glas, wahlweise als Folienantenne
- 33: Ausrüstungsset eingebaut in Leuchte
- 34: Antennenmanschette mit Kunststoffaußenwand. Folienantenne innen an Außenwand
- 35: Gerätebehälter im Mast versenkt
- 36: Ausrüstungsset als Maststück, bestehend aus einer Streben- oder Karbon-verstärkten Kunststoffhülle. Folienantenne innen an Außenwand

## Patentansprüche

1. Straßenleuchte, die Folgendes aufweist:
einen Leuchtenmast;
einen Leuchtenkopf, der ein Leuchtmittel der Straßenleuchte aufweist;
eine Basisstation eines Mobilfunknetzes; und
ein Ausrüstungsset, welches an dem Leuchtenmast und/oder an dem Leuchtenkopf installiert ist, wobei das Ausrüstungsset einen Geräteraum aufweist, in welchem wenigstens eine Antenne der Basisstation angeordnet ist.

2. Straßenleuchte nach Anspruch 1, wobei der Geräteraum eine Außenwand aufweist, die sich um 360° um den Leuchtenmast und/oder den Leuchtenkopf erstreckt und die Außenwand für elektromagnetische Strahlung transparent ist.

3. Straßenleuchte nach einem der vorhergehenden Ansprüche, wobei das Ausrüstungsset an die Geometrie einer Außenkontur des Leuchtenmasts und/oder des Leuchtenkopfs angepasst ist.

4. Straßenleuchte nach einem der vorhergehenden Ansprüche, wobei das Ausrüstungsset als Mastmanschette um den Leuchtenmast ausgebildet ist.

5. Straßenleuchte nach einem der Ansprüche 1 bis 3, wobei das Ausrüstungsset als Zwischenstück des Leuchtenmasts ausgebildet ist, und insbesondere zwischen einem Ende des Leuchtenmast und einem Ende des Leuchtenkopfs angeordnet ist.

6. Straßenleuchte nach einem der Ansprüche 1 bis 3, wobei das Ausrüstungsset als Aufsatz auf den Leuchtenkopf ausgebildet ist.

7. Straßenleuchte nach einem der Ansprüche 1 bis 3, wobei das Ausrüstungsset als Einschub in den Leuchtenmast oder den Leuchtenkopf ausgebildet ist.

8. Straßenleuchte nach einem der vorhergehenden Ansprüche, wobei die wenigstens eine Antenne mehrere Flächen-und/oder Folienantennen umfasst, die innen liegend an einer Außenwanne des Geräteraums entlang des Umfangs des Leuchtenmasts und/oder des Leuchtenkopfs angeordnet sind.

9. Straßenleuchte nach einem der vorhergehenden Ansprüche, wobei das Ausrüstungsset in einer Höhe zwischen drei und zwölf Meter über dem Boden an dem Leuchtenmast und/oder dem Leuchtenkopf angebracht ist.

10. Straßenleuchte nach einem der vorhergehenden Ansprüche, welche ferner einen Bodentank oder einen bodennahen Schaltschrank aufweist, in welchem Komponenten der Basisstation angeordnet sind.

11. Straßenleuchte nach einem der vorhergehend Ansprüche, wobei in dem Ausrüstungsset Komponenten für eine optische Kommunikation, Virtual Light Communication, VLC, angeordnet sind.

12. Straßenleuchte nach einem der vorhergehenden Ansprüche, wobei das Ausrüstungsset Außenwände aufweist, die den Geräteraum gegen Staub, Stöße, Feuchtigkeit, Wind und UV-Strahlung schützen, insbesondere einen Schutz nach IP44 oder höher gewährleisten.

13. Straßenleuchte nach einem der vorhergehenden Ansprüche, wobei das Ausrüstungsset eine Außenwand aufweist, die aus mehreren, vorzugsweise gleich geformten, Schalenelementen besteht, welche den Geräteraum nach außen umschließen.

14. Ausrüstungsset für eine Straßenleuchte nach Anspruch 1, wobei das Ausrüstungsset dafür eingerichtet ist, an einem Leuchtenmast und/oder an einem Leuchtenkopf der Straßenleuchte installiert zu werden und in dem Ausrüstungsset wenigstens eine Antenne einer Basisstation angeordnet ist.
